# EUROPEAN PATENT APPLICATION

(11) **EP 4 756 612 A1**
(43) Date of publication of application: **10.06.2026**
(21) Application number: 24888926.3
(22) Date of filing: 23.09.2024
(51) Int. Cl.: G06F 9/455, G06F 9/48, G06F 11/30, G06F 11/32, G06F 1/08

(54) **BATTERY DATA ANALYSIS SERVER AND OPERATING METHOD THEREOF**

(30) Priority: 07.11.2023 KR 20230153072
(71) Applicant: LG Energy Solution, Ltd., Seoul 07335 (KR)
(72) Inventor: JO, Jeong Jae, Daejeon 34122 (KR)
(74) Representative: Goddar, Heinz J.
(86) International application number: PCT/KR2024/014279
(87) International publication number: WO 2025/100730

(57) **Abstract**

A battery data analysis server according to one embodiment disclosed herein includes a communication unit configured to receive battery data from a plurality of vehicles, and a processor operatively connected to the communication unit, wherein the processor calculates an analysis time of an analysis engine configured to analyze the battery data based on the number of battery data and manages an instance related to driving of a container based on the analysis time, and the instance executes the container including the analysis engine.

## Description

### Technical Field

### CROSS-REFERENCE TO RELATED APPLICATION

This application claims priority to and the benefit of Korean Patent Application No. 10-2023-0153072 filed in the Korean Intellectual Property Office on November 7, 2023, the entire contents of which are incorporated herein by reference.

### TECHNICAL FIELD

Embodiments disclosed herein relate to a battery data analysis server and a method of operating the same.

### Background Art

Recently, as demand for portable electronic products such as laptops, video cameras, and portable phones increases rapidly, and as the development of electric vehicles, energy storage batteries, robots, satellites, and the like begins in earnest, the research on high-performance secondary batteries capable of repeated charging and discharging is actively being conducted.

Currently commercialized secondary batteries include a nickel cadmium battery, a nickel hydride battery, a nickel zinc battery, a lithium-ion battery, and the like, and among them, since the lithium-ion battery has advantages in that little memory effect occurs compared to the nickel-based secondary battery and thus charge/discharge may be freely performed, a self-discharge rate is very low, and an energy density is high, the lithium-ion secondary battery is attracting attention.

Meanwhile, to check states of secondary batteries included in electric vehicles (EVs), a server may collect battery data of the EV and analyze the battery data using an instance driven in a separate cloud. However, in this case, since the server does not consider a battery data analyzing method and battery data analysis time, there are problems that the time required to analyze the battery data is increased and the cost is increased due to the use of an instance.

### Disclosure

### Technical Problem

Embodiments disclosed herein are directed to providing a battery data analysis server and a method of operating the same, in which battery data of a vehicle is analyzed.

Embodiments disclosed herein are also directed to providing a battery data analysis server and a method of operating the same, in which efficiency of battery data analysis is increased using an instance selected according to a method of analyzing the battery data.

Embodiments disclosed herein are also directed to providing a battery data analysis server and a method of operating the same, in which efficiency of battery data analysis is increased using an instance selected based on an analysis time of battery data.

Embodiments disclosed herein are also directed to providing a battery data analysis server and a method of operating the same, in which efficiency of battery data analysis is increased by independently driving a plurality of containers for executing an analysis engine.

The objects of the embodiments disclosed herein are not limited to the above-described objects, and other objects that are not described will be able to be clearly understood by those skilled in the art to which the present disclosure pertains from the following description.

### Technical Solution

A battery data analysis server according to one embodiment disclosed herein includes a communication unit configured to receive battery data from a plurality of vehicles, and a processor operatively connected to the communication unit, wherein the processor calculates an analysis time of an analysis engine configured to analyze the battery data based on the number of battery data and manages an instance related to driving of a container based on the analysis time, and the instance executes the container including the analysis engine.

According to one embodiment, the analysis engine may analyze the battery data in at least one method of real-time analysis or daily analysis.

According to one embodiment, when the analysis engine analyzes the battery data on a daily basis or the analysis time is a preset time or shorter, the processor may select the instance as a first instance.

According to one embodiment, when the analysis engine analyzes the battery data in real time and the analysis time exceeds the preset time, the processor may select the instance as a second instance that differs from the first instance.

According to an embodiment, a clock speed of the second instance 420 may be higher than a clock speed of the first instance 410.

According to one embodiment, the first instance may further execute an additional container that differs from the container, and each independently drive the container and the additional container.

According to one embodiment, a memory of each of the container and the additional container may have a value that is greater than or equal to a preset value, and a memory of the first instance may be greater than the sum of the memory of the container and the memory of the additional container.

According to one embodiment, when the analysis of the battery data of the container and the analysis of the battery data of the additional container are both finished, the processor may finish the use of the first instance.

According to one embodiment, the processor may receive the result of analyzing the battery data from the analysis engine and provide a user with the result of analyzing the battery data.

A method of analyzing battery data according to one embodiment disclosed herein includes an operation of receiving pieces of battery data from a plurality of vehicles, an operation of calculating an analysis time of an analysis engine configured to analyze the battery data based on the number of battery data, and an operation of managing an instance configured to execute a container including the analysis engine based on the analysis time.

According to one embodiment, when the analysis engine analyzes the battery data on a daily basis or the analysis time is a preset time or shorter, the operation of managing the instance may include an operation of selecting the instance as a first instance.

According to one embodiment, when the analysis engine analyzes the battery data in real time and the analysis time exceeds the preset time, the operation of managing the instance may include an operation of selecting the instance as a second instance that differs from the first instance.

According to an embodiment, a clock speed of the second instance 420 may be higher than a clock speed of the first instance 410.

According to one embodiment, the first instance may further execute an additional container that differs from the container, and each independently drive the container and the additional container.

According to one embodiment, a memory of each of the container and the additional container may have a value that is greater than or equal to the preset value, and a memory of the first instance may be greater than the sum of the memory of the container and the memory of the additional container.

According to one embodiment, the method may further include an operation of finishing the use of the first instance when the analysis of the battery data of the container and the analysis of the battery data of the additional container are both finished.

According to one embodiment, the method may further include an operation of providing a user with the result of analyzing the battery data received from the analysis engine.

Detailed matters of other embodiments are included in a detailed description and accompanying drawings.

### Advantageous Effects

According to the battery data analysis server and the method of operating the same according to the embodiments disclosed herein, the battery data included in the vehicle can be analyzed.

According to the battery data analysis server and the method of operating the same according to the embodiments disclosed herein, it is possible to increase the efficiency of battery data analysis using the instance selected according to the method of analyzing the battery data.

According to the battery data analysis server and the method of operating the same according to the embodiments disclosed herein, it is possible to increase the efficiency of battery data analysis using the instance selected based on the analysis time of the battery data.

According to the battery data analysis server and the method of operating the same according to the embodiments disclosed herein, it is possible to increase the efficiency of battery data analysis by independently driving the plurality of containers for executing the analysis engine.

The effects of the battery data analysis server and the method of operating the same according to the disclosure of the present document are not limited to the above-described effects, and other effects that are not described will be able to be clearly understood by those skilled in the art according to the disclosure of the present document.

### Description of Drawings

FIG. 1 is a block diagram showing a battery data analysis system according to one embodiment disclosed herein.
FIG. 2 is a view showing an operation of analyzing battery data using a container by a server according to one embodiment disclosed herein.
FIG. 3 is a view showing an operation of analyzing battery data using a first instance, a first container, and a second container by the server according to one embodiment disclosed herein.
FIG. 4 is a view showing an operation of analyzing battery data using a second instance and the first container by the server according to one embodiment disclosed herein.
FIG. 5 is a flowchart showing a battery analyzing method according to one embodiment disclosed herein.

In the description of the drawings, the same or similar reference numerals may be used for the same or similar components.

### Mode for Invention

Hereinafter, embodiments of the present invention will be described with reference to the accompanying drawings. However, it should be understood that this is not intended to limit the present disclosure to specific embodiments and includes various modifications, equivalents, and/or alternatives of the embodiments of the present disclosure.

It should be understood that the embodiments of this document and the terms used herein are not intended to limit the technical features described herein to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. Terms such as "first," "second," "A," "B," "(a)," or "(b)" may simply be used to distinguish the corresponding component from another and do not limit the corresponding components in another aspect (e.g., importance or order).

In the present document, when a certain (e.g., a first) component is described as being "coupled," "connected," or "joined" to another (e.g., a second) component with or without the terms "functionally" or "communicatively" or "coupled" or "connected," this means that the certain component may be connected to another component directly (e.g., in a wired or wireless manner) or indirectly (e.g., through a third component).

A method according to various embodiments disclosed herein may be provided to be included in a computer program product. The computer program product may be traded between sellers and buyers as commodities. The computer program product may be distributed in the form of a device-readable storage medium (e.g., a compact disc read only memory (CD-ROM)) or distributed (e.g., downloaded or uploaded) through application stores or directly online between two user devices. In the case of the online distribution, at least some of the computer program products may be at least temporarily stored or temporarily generated in a device-readable storage medium such as a memory of a server of a manufacturer, a server of an application store, or a relay server.

According to the embodiments disclosed herein, each component (e.g., a module or a program) of the above-described components may include a single object or a plurality of objects, and some of the plurality of objects may be separately disposed in another component. According to the embodiments disclosed herein, one or more components or operations among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to the embodiments disclosed herein, operations performed by modules, programs, or other components may be executed sequentially, in parallel, repeatedly, or heuristically, or one or more of the operations may be executed in a different order or omitted, or one or more other operations may be added.

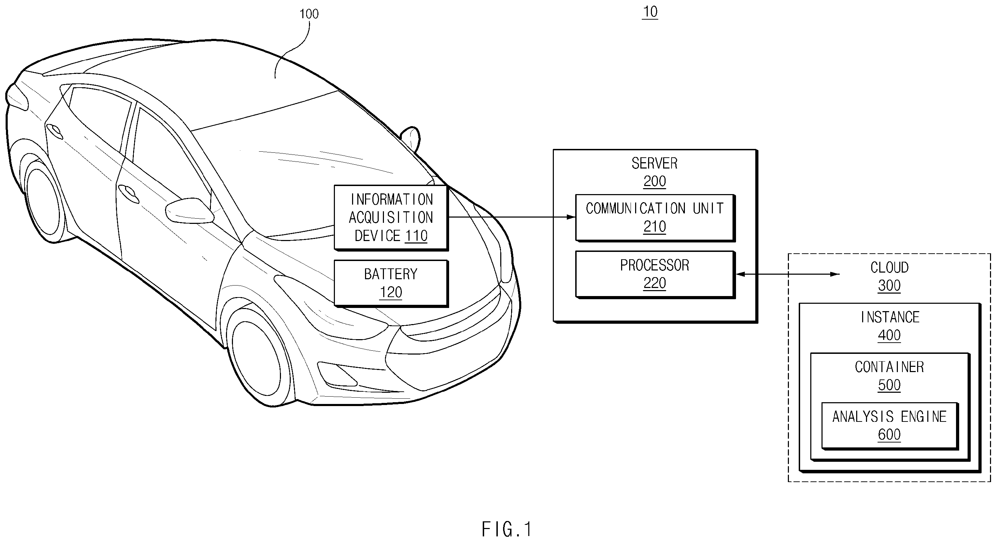

FIG. 1 is a block diagram showing a battery data analysis system according to one embodiment disclosed herein.

Referring to FIG. 1, a battery data analysis system 10 may include a target vehicle 100, a server 200, and a cloud 300. The battery data analysis system 10 may be configured so that the server 200 may receive battery data of the target vehicle 100 and analyze the battery data using the cloud 300.

The target vehicle 100 may be an electric vehicle. The target vehicle 100 may be an electric vehicle including a battery 120. That is, the target vehicle 100 may be an electric vehicle (EV), a hybrid EV (HEV), a plug-in HEV (PHEV), or a fuel cell EV (FCEV) that includes the battery 120.

The target vehicle 100 may include an information acquisition device 110. Here, the image acquisition device 110 may include an onboard diagnostic device. That is, the information acquisition device 110 may acquire data of the target vehicle 100 and data on the battery 120 included in the target vehicle 100.

The information acquisition device 110 may generate battery data. According to an embodiment, the information acquisition device 110 may generate battery data based on a state of charge (SOC), a state of health (SOH), an open circuit voltage (OCV), charge capacity, discharge capacity, and the like of the battery 120 acquired from the battery 120.

According to an embodiment, the information acquisition device 110 may generate battery data at a predetermined cycle. For example, the information acquisition device 110 may generate battery data at a preset cycle in a section in which the target device is driven or generate battery data at a preset cycle regardless of whether the target device is driven.

The information acquisition device 110 may transmit the battery data. According to an embodiment, the information acquisition device 110 may transmit the battery data to the server 200. For example, the information acquisition device 110 may transmit the battery data to the server 200 via Long Term Evolution (LTE) communication.

The server 200 may include a communication unit 210 and a processor 220. The server 200 may analyze the battery data received from the information acquisition device 110 using the cloud 300.

The communication unit 210 may communicate with a plurality of vehicles. The communication unit 210 may communicate with the information acquisition device 110 included in each of the plurality of vehicles. Here, the plurality of vehicles may include the target vehicle 100. According to an embodiment, the communication unit 210 may receive the battery data from the information acquisition device 110. The communication unit 210 may transmit the battery data to the processor 220.

The processor 220 may be operatively connected to the communication unit 210. According to an embodiment, the processor 220 may operate in response to the reception of the battery data by the communication unit 210. That is, the operation of the processor 220 and the operation of the communication unit 210 may be connected as a set. Therefore, when the communication unit 210 receives the battery data and transmits the battery data to the processor 220, the processor 220 may be driven immediately.

The processor 220 may manage an instance 400. The processor 220 may manage the instance 400 on the cloud. According to an embodiment, the processor 220 may be connected to the cloud 300 and may execute, control, or finish the instance 400 on the cloud 300 to manage the instance 400. That is, hereinafter, an operation described as the operation of the instance 400 may be an operation by the management of the processor 220.

The processor 220 may check the number of battery data. According to an embodiment, the processor 220 may check the number of battery data received by the communication unit 210, but is not limited thereto. For example, the processor 220 may check the capacity of the battery data rather than the number of battery data.

The processor 220 may calculate the analysis time of the battery data. According to an embodiment, the processor 220 may calculate the analysis time of the battery data based on the performance of an analysis engine 600 configured to analyze the battery data or a container 500 that includes the analysis engine 600. Here, the container 500 will be described below together with the instance 400 and the cloud 300.

The processor 220 may check a method of analyzing the battery data. The processor 220 may check whether the method of analyzing the battery data of the analysis engine 600 uses any of the analysis methods of real-time analysis and daily analysis. Here, the real-time analysis may be a method of immediately analyzing the battery data received from the target vehicle 100. The daily analysis may be a method of classifying and storing the battery data received from the target vehicle 100 by date and analyzing the battery data stored by each date by each date.

The processor 220 may manage the instance 400. According to an embodiment, the processor 220 may manage the execution or finishing of the instance 400. The processor 220 may execute the instance 400, select the type of container 500 to be executed by the instance 400 and the number of containers 500 and finish the instance 400.

The processor 220 may select the instance 400 to be executed among a plurality of instances 400. The processor 220 may select the instance 400 based on the analysis time and analysis method of the battery data. According to an embodiment, when the analysis engine 600 analyzes the battery data on a daily basis or the analysis time is a preset time or shorter, the processor 220 may select the instance 400 to be executed as a first instance 410. In addition, when the analysis engine 600 analyzes the battery data in real time and the analysis time exceeds the preset time, the processor 220 may select the instance 400 to be executed as a second instance 420 that differs from the first instance 410. Here, the first instance 410 and the second instance 420 may be different instances 400. According to an embodiment, a clock speed of the second instance 420 may be higher than a clock speed of the first instance 410. That is, the second instance 420 may have higher specifications than the first instance 410. That is, when the processor 220 analyzes the battery data in real time and the analysis time of the real-time analysis is the preset time or longer, the processor 220 may select the instance 400 as the second instance 420, which is the instance 400 with higher specifications, to reduce the analysis time. Therefore, the processor 220 may invest computing resources and costs to shorten the analysis time of the real-time analysis. When the processor 220 analyzes the battery data on a daily basis or the analysis time is shorter than the preset time, the processor 220 may select the instance 400 as the first instance 410 to reduce the cost required for battery data analysis. Therefore, it is possible to increase the efficiency of battery data analysis.

The cloud 300 may include the instance 400, the container 500, and the analysis engine 600. Here, the cloud 300 may mean an IT environment that provides a virtualized server 200 accessible through a network, a program operated on the server 200, and a database. That is, the cloud 300 may provide computing resources including the instance 400 via the Internet.

The instance 400 may be computing resources provided from the cloud 300. That is, the processor 220 may execute the computing resources, such as the container 500 and the databases, using the instance 400 of the cloud 300. The instance 400 may include any type according to performance and resources. That is, the instance 400 may include the first instance 410 and the second instance 420.

The instance 400 may execute the container 500. According to an embodiment, the instance 400 may execute the container 500 including the analysis engine 600 to analyze the battery data. That is, the instance 400 may execute at least one container 500 and analyze the battery data using the analysis engine 600 included in the container 500.

The instance 400 may execute a plurality of containers 500. According to an embodiment, the first instance 410 may execute a first container 510 and a second container 520. The first instance 410 may independently execute each of the first container 510 and the second container 520. That is, the first instance 410 may execute the first container 510 to analyze the battery data and separately execute the second container 520 to analyze the battery data. In this case, the battery data analysis of the first container 510 and the battery data analysis of the second container 520 may be executed independently. In addition, a memory of each of the first container 510 and the second container 520 may be a set value or more. Here, the set value may be 5 GB, but is not limited thereto. In addition, a memory of the first instance 410 may be greater than the sum of the memory of the first container 510 and the memory of the second container 520. Therefore, the first instance 410 may execute the first container 510 and the second container 520 together.

The instance 400 may transmit the result of analyzing the battery data to the processor 220. The instance 400 may transmit the result of analyzing the battery data of the analysis engine 600 included in the container 500 to the processor 220.

The processor 220 may provide the result of analyzing the battery data to a user. The processor 220 may transmit the result of analyzing the battery data to the user using the communication unit 210. That is, the processor 220 may identify the target vehicle 100 corresponding to the battery data and transmit the result of analyzing the battery data to a user corresponding to each target vehicle 100. For example, the processor 220 may upload the result of analyzing the battery data to the cloud 300 and allow the user to check the uploaded result in the cloud 300 to transmit the result of analyzing the battery data to the user. The processor 220 may directly provide the result of analyzing the battery data to a user terminal or a PC. In addition, the processor 220 may provide daily data through a display provided in the target vehicle 100.

The server 200 may analyze the battery data included in the vehicle. The server 200 can increase the efficiency of the battery data analysis using the instance 400 selected according to the method of analyzing the battery data. The server 200 can increase the efficiency of the battery data analysis using the instance 400 selected based on the analysis time of the battery data. The server 200 can increase the efficiency of the battery data analysis by independently driving the plurality of containers 500 for executing the analysis engine 600.

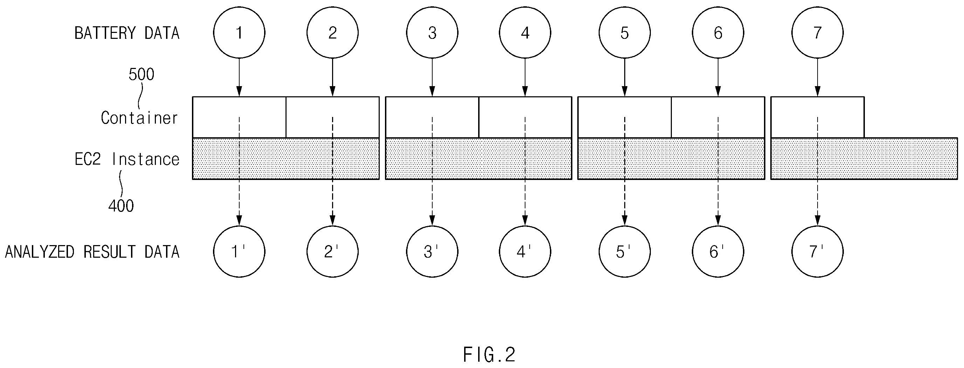

FIG. 2 is a view showing an operation of analyzing battery data using the container 500 by the server 200 according to one embodiment disclosed herein.

Referring to FIG. 2, the server 200 may analyze battery data. According to an embodiment, the processor 220 may analyze a plurality of battery data using a plurality of instances 400 and containers 500.

The processor 220 may execute the plurality of instances 400. According to an embodiment, the container 500 may execute the plurality of instances 400 on the cloud 300 in response to the reception of the battery data of the communication unit 210. In addition, each of the plurality of instances 400 executed by the processor 220 may execute at least one container 500.

The processor 220 may distinguish each of the plurality of battery data. For example, the processor 220 may distinguish each of the plurality of battery data based on the type of the target vehicle 100, a reception time of the battery data, an identification number of the target vehicle 100, and the like.

The processor 220 may assign the battery data to the container 500. According to an embodiment, the processor 220 may assign each of the plurality of battery data to each of the plurality of containers 500 executed by the plurality of instances 400. Therefore, each of the plurality of battery data may be transmitted to each of the plurality of containers 500. Each of the plurality of containers 500 may analyze the battery data using the analysis engine 600 included in the container 500.

The container 500 may generate the result of analyzing the battery data. According to an embodiment, each of the plurality of containers 500 may analyze the assigned battery data to generate the result of analyzing the battery data. Therefore, the number of battery data received by the container 500 and the number of results of analyzing the battery data generated by the container 500 may be the same, but are not limited thereto.

The container 500 may transmit the result of analyzing the battery data to the processor 220. According to an embodiment, the container 500 may analyze the battery data, and the instance 400 including the container 500 may transmit the result of analyzing the battery data to the processor 220.

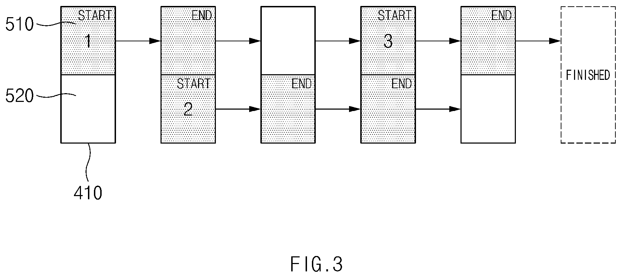

FIG. 3 is a view showing an operation of analyzing battery data using a first instance, a first container, and a second container by the server according to one embodiment disclosed herein.

Referring to FIG. 3, the processor 220 may execute the first instance 410. According to an embodiment, when the analysis engine 600 analyzes the battery data on a daily basis or the analysis time is the preset time or shorter, the processor 220 may select the instance 400 to be executed as the first instance 410.

The first instance 410 may execute the first container 510. The first instance 410 may execute the first container 510 to analyze the first battery data. Therefore, the first instance 410 may analyze the first battery data using the analysis engine 600 included in the first container 510.

The first instance 410 may execute the second container 520. The first instance 410 may receive the second battery data during the analysis of the first battery data. The first instance 410 may execute the second container 520 to analyze the second battery data. That is, the first instance 410 may execute the second container 520 separately from the first container 510 and analyze the second battery data using the analysis engine 600 included in the second container 520. In this case, whether the analysis of the first battery data of the first container 510 is finished may not affect the analysis of the second battery data of the second container 520. For example, when the analysis of the first battery data of the first container 510 is finished while the second container 520 analyzes the second battery data, the first instance 410 may finish the first container 510 and maintain the analysis of the second battery data of the second container 520.

The first instance 410 may execute the first container 510. The first instance 410 may receive third battery data during the analysis of the second battery data. The first instance 410 may execute the first container 510 to analyze the third battery data. That is, the first instance 410 may execute the first container 510 separately from the second container 520 and analyze the third battery data using the analysis engine 600 included in the first container 510. In this case, whether the analysis of the second battery data of the second container 520 is finished may not affect the analysis of the third battery data of the first container 510. For example, when the analysis of the second battery data of the second container 520 is finished while the first container 510 analyzes the third battery data, the first instance 410 may finish the second container 520 and maintain the analysis of the third battery data of the first container 510.

The processor 220 may finish the first instance 410. The processor 220 may finish the first instance 410 when the operations of the first container 510 and the second container 520 of the first instance 410 are both finished. That is, the processor 220 may finish the first instance 410 when the first instance 410 does not execute any container 500.

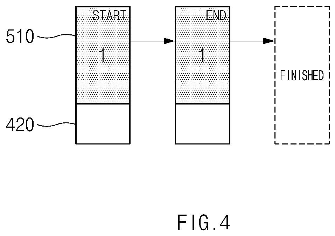

FIG. 4 is a view showing an operation of analyzing battery data using a second instance and the first container by the server according to one embodiment disclosed herein.

Referring to FIG. 4, when the analysis engine 600 analyzes the battery data in real time and the analysis time exceeds the preset time, the processor 220 may select the instance 400 to be executed as the second instance 420 that differs from the first instance 410. According to an embodiment, the clock speed of the second instance 420 may be higher than the clock speed of the first instance 410. That is, the second instance 420 may have higher specifications than the first instance 410. That is, the processor 220 may analyze the battery data in real time and when the analysis time of the real-time analysis is the preset time or longer, select the instance 400 as the second instance 420, which is the instance 400 with higher specifications, to reduce the analysis time.

The second instance 420 may execute the first container 510. The second instance 420 may execute the first container 510 to analyze the first battery data. Therefore, the second instance 420 may analyze the first battery data using the analysis engine 600 included in the first container 510. Here, the first container 510 may differ from the first container 510 executed by the first instance 410. That is, the first container 510 executed by the second instance 420 may have higher specifications than the first container 510 executed by the first instance 410. Therefore, a battery data analysis speed of the second instance 420 may be faster than a battery data analysis speed of the first instance 410.

The processor 220 may finish the second instance 420. The processor 220 may finish the second instance 420 when the operations of all first containers 510 of the second instance 420 are finished. That is, the processor 220 may finish the second instance 420 when the second instance 420 does not execute any container 500.

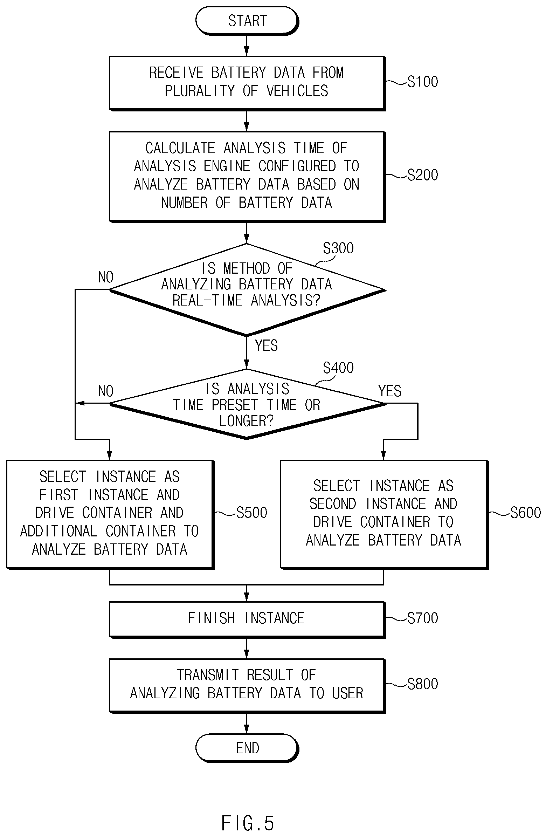

FIG. 5 is a flowchart showing a battery analyzing method according to one embodiment disclosed herein.

The embodiment illustrated in FIG. 5 is only one embodiment, the order of operations according to various embodiments of the present invention may be different from that illustrated in FIG. 5, and some operations illustrated in FIG. 5 may be omitted, the order between the operations may be changed, or the operations may be merged.

Referring to FIG. 5, the method of analyzing the battery data may include an operation of receiving pieces of battery data from a plurality of vehicles (S100), an operation of calculating an analysis time of the analysis engine 600 configured to analyze the battery data based on the number of battery data (S200), an operation of determining whether the method of analyzing the battery data is real-time analysis (S300), an operation of determining whether the analysis time is a preset time or longer (S400), an operation of selecting the instance 400 as the first instance 410 and independently driving the container 500 and the additional container 500 to analyze the battery data (S500), an operation of selecting the instance 400 as the second instance 420 and driving the container 500 to analyze the battery data (S600), an operation of finishing the instance 400 (S700), and an operation of transmitting the result of analyzing the battery data to the user (S800).

Hereinafter, operations S100 to S800 will be described in detail with reference to FIGS. 1 to 4.

In operation S100, the server 200 may receive the pieces of battery data from the plurality of vehicles. The server 200 may communicate with the plurality of vehicles. The server 200 may communicate with the information acquisition device 110 included in each of the plurality of vehicles. Here, the plurality of vehicles may include the target vehicle 100. According to an embodiment, the server 200 may receive the battery data from the information acquisition device 110.

In operation S200, the server 200 may calculate the analysis time of the analysis engine 600 configured to analyze the battery data based on the number of battery data.

The server 200 may check the number of battery data. According to an embodiment, the server 200 may check the number of battery data received by the communication unit 210, but is not limited thereto. For example, the server 200 may check the capacity of the battery data rather than the number of battery data.

The server 200 may calculate the analysis time of the battery data. According to an embodiment, the server 200 may calculate the analysis time of the battery data based on the performance of the analysis engine 600 configured to analyze the battery data or the container 500 that includes the analysis engine 600.

In operation S300, the server 200 may determine whether the method of analyzing the battery data is real-time analysis. The server 200 may check the method of analyzing the battery data. The server 200 may check whether the method of analyzing the battery data of the analysis engine 600 uses any of the analysis methods of real-time analysis and daily analysis. When the method of analyzing the battery data is the real-time analysis, operation S400 may be performed. When the method of analyzing the battery data is the daily analysis, operation S500 may be performed.

In operation S400, the server 200 may determine whether the analysis time is the preset time or longer. When the analysis time of the battery data is the preset time or longer, operation S600 may be performed. When the analysis time of the battery data is shorter than the preset time, operation S500 may be performed.

In operation S500, the server 200 may select the instance 400 as the first instance 410 and independently drive the container 500 and the additional container 500 to analyze the battery data. Here, the container 500 may be the first container 510, and the additional container 500 may be the second container 520.

The first instance 410 may execute the first container 510. The first instance 410 may execute the first container 510 to analyze the first battery data. Therefore, the first instance 410 may analyze the first battery data using the analysis engine 600 included in the first container 510.

The first instance 410 may execute the second container 520. The first instance 410 may receive the second battery data during the analysis of the first battery data. The first instance 410 may execute the second container 520 to analyze the second battery data. That is, the first instance 410 may execute the second container 520 separately from the first container 510 and analyze the second battery data using the analysis engine 600 included in the second container 520. In this case, whether the analysis of the first battery data of the first container 510 is finished may not affect the analysis of the second battery data of the second container 520.

In operation S600, the server 200 may select the instance 400 as the second instance 420 and drive the container 500 to analyze the battery data. When the analysis engine 600 analyzes the battery data in real time and the analysis time exceeds the preset time, the server 200 may select the instance 400 to be executed as the second instance 420 that differs from the first instance 410. According to an embodiment, the clock speed of the second instance 420 may be higher than the clock speed of the first instance 410. That is, the second instance 420 may have higher specifications than the first instance 410. That is, when the server 200 analyzes the battery data in real time and the analysis time of the real-time analysis is the preset time or longer, the server 200 may select the instance 400 as the second instance 420, which is the instance 400 with higher specifications, to reduce the analysis time.

The second instance 420 may execute the first container 510. The second instance 420 may execute the first container 510 to analyze the first battery data. Therefore, the second instance 420 may analyze the first battery data using the analysis engine 600 included in the first container 510. Here, the first container 510 may differ from the first container 510 executed by the first instance 410. That is, the first container 510 executed by the second instance 420 may have higher specifications than the first container 510 executed by the first instance 410. Therefore, a battery data analysis speed of the second instance 420 may be faster than a battery data analysis speed of the first instance 410.

In operation S700, the server 200 may finish the instance 400. The server 200 may finish the instance 400 when the operations of all containers 500 of the instance 400 are finished. That is, the server 200 may finish the instance 400 when the instance 400 does not execute any container 500.

In operation S800, the server 200 may transmit the result of analyzing the battery data to the user. The server 200 may transmit the result of analyzing the battery data to the user using the communication unit 210. That is, the server 200 may identify the target vehicle 100 corresponding to the battery data and transmit the result of analyzing the battery data to a user corresponding to each target vehicle 100. For example, the server 200 may upload the result of analyzing the battery data to the cloud 300 and allow the user to check the uploaded result in the cloud 300 to transmit the result of analyzing the battery data to the user. The server 200 may directly provide the result of analyzing the battery data to a user terminal or a PC. In addition, the server 200 may provide daily data through a display provided in the target vehicle 100.

The above description is merely the exemplary description of the technical spirit disclosed herein, and those skilled in the art to which embodiments disclosed herein pertain will be able to variously modify and change the embodiments without departing from the essential characteristics of the embodiments disclosed herein.

Therefore, the embodiments disclosed herein are not intended to limit the technical spirit disclosed herein, but for describing it, and the scope of the technical spirit disclosed herein is not limited by these embodiments. The scope of the technical spirit disclosed herein should be construed by the appended claims, and all technical spirits within the equivalent range should be construed as being included in the scope of this document.

### [DESCRIPTION OF REFERENCE NUMERALS]

10: battery data analysis system
100: target vehicle
110: information acquisition device
200: server
210: communication unit
220: processor
300: cloud
400: instance
500: container

## Claims

1. A battery data analysis server comprising:
a communication unit configured to receive battery data from a plurality of vehicles; and
a processor operatively connected to the communication unit,
wherein the processor calculates an analysis time of an analysis engine configured to analyze the battery data based on the number of battery data and manages an instance related to driving of a container based on the analysis time, and
the instance executes the container including the analysis engine.

2. The battery data analysis server of claim 1, wherein the analysis engine analyzes the battery data in at least one method of real-time analysis or daily analysis.

3. The battery data analysis server of claim 2, wherein, when the analysis engine analyzes the battery data on a daily basis or the analysis time is a preset time or shorter, the processor selects the instance as a first instance.

4. The battery data analysis server of claim 3, wherein, when the analysis engine analyzes the battery data in real time and the analysis time exceeds the preset time, the processor selects the instance as a second instance that differs from the first instance.

5. The battery data analysis server of claim 4, wherein a clock speed of the second instance is higher than a clock speed of the first instance.

6. The battery data analysis server of claim 3, wherein the first instance further executes an additional container that differs from the container, and
each independently drives the container and the additional container.

7. The battery data analysis server of claim 6, wherein a memory of each of the container and the additional container has a value that is greater than or equal to a preset value, and
a memory of the first instance is greater than the sum of the memory of the container and the memory of the additional container.

8. The battery data analysis server of claim 6, wherein, when the analysis of the battery data of the container and the analysis of the battery data of the additional container are both finished, the processor finishes the use of the first instance.

9. The battery data analysis server of claim 1, wherein the processor receives the result of analyzing the battery data from the analysis engine and provides a user with the result of analyzing the battery data.

10. A method of analyzing battery data, comprising:
an operation of receiving pieces of battery data from a plurality of vehicles;
an operation of calculating an analysis time of an analysis engine configured to analyze the battery data based on the number of battery data; and
an operation of managing an instance configured to execute a container including the analysis engine based on the analysis time.

11. The method of claim 10, wherein, when the analysis engine analyzes the battery data on a daily basis or the analysis time is a preset time or shorter, the operation of managing the instance includes an operation of selecting the instance as a first instance.

12. The method of claim 11, wherein, when the analysis engine analyzes the battery data in real time and the analysis time exceeds the preset time, the operation of managing the instance includes an operation of selecting the instance as a second instance that differs from the first instance.

13. The method of claim 12, wherein a clock speed of the second instance is higher than a clock speed of the first instance.

14. The method of claim 11, wherein the first instance further executes an additional container that differs from the container, and
each independently drives the container and the additional container.

15. The method of claim 14, wherein a memory of each of the container and the additional container has a value that is greater than or equal to the preset value, and
a memory of the first instance is greater than the sum of the memory of the container and the memory of the additional container.

16. The method of claim 14, further comprising an operation of finishing the use of the first instance when the analysis of the battery data of the container and the analysis of the battery data of the additional container are both finished.

17. The method of claim 10, further comprising an operation of providing a user with the result of analyzing the battery data received from the analysis engine.
